(19) Europäisches Patentamt
European Patent Office
Office européen des brevets

(11) Numéro de publication : 0 299 883 B1

(12) # FASCICULE DE BREVET EUROPEEN

(45) Date de publication du fascicule du brevet : 25.09.91 Bulletin 91/39

(51) Int. Cl.[5] : C08K 5/57, C08L 83/04, C07F 7/22

(21) Numéro de dépôt : 88420218.5

(22) Date de dépôt : 23.06.88

(54) **Catalyseur à l'étain obtenu à partir d'acide carboxylique et de bischelate d'étain pour composition élastomère.**

(30) Priorité : 25.06.87 FR 8709179

(43) Date de publication de la demande : 18.01.89 Bulletin 89/03

(45) Mention de la délivrance du brevet : 25.09.91 Bulletin 91/39

(84) Etats contractants désignés : AT BE CH DE ES FR GB GR IT LI LU NL SE

(56) Documents cités :
US-A- 147 323
US-A- 4 517 337
US-A- 4 554 310

(73) Titulaire : RHONE-POULENC CHIMIE
25, quai Paul Doumer
F-92408 Courbevoie Cédex (FR)

(72) Inventeur : Cavezzan, Jacques
Résidence du Parc Tête d'Or,4, Allée Marcel Achard
F-69100 Villeurbanne (FR)
Inventeur : Frances, Jean-Marc
9, avenue Condorcet
F-69100 Villeurbanne (FR)
Inventeur : Lancelin, Pierre
177, Impasse du Bois
F-69260 Marcy L'Etoile (FR)

(74) Mandataire : Seugnet, Jean Louis et al
RHONE-POULENC INTERSERVICES Service Brevets Chimie Centre de Recherches des Carrières B.P. 62
F-69192 Saint-Fons Cédex (FR)

EP 0 299 883 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

De nombreux composés de l'étain ont déjà été proposés comme catalyseur de réticulation de compositions polyorganosiloxanes et en particulier de compositions RTV (compositions volcanisables à température ambiante) à un seul ou à deux emballages autrement dit mono ou bi-composantes.

Les composés les plus utilisés sont les carboxylates d'étain tels que le monooléate de tributylétain, l'éthyl-2 hexanoate d'étain ou les dicarboxylates de dialkylétain tels que le dilaurate de dibutylétain et le diacétate de dibutylétain (voir l'ouvrage de NOLL "Chemistry and Technology of Silicones" page 337, Academic Press, 1968 — 2ème édition).

Selon le brevet US-A-3186963, on propose comme catalyseur à l'étain le produit de la réaction d'un dialkyldialcoxysilane sur un carboxylate d'étain.

Selon le brevet belge BE-A-842305, on propose comme catalyseur le produit de la réaction d'un silicate d'alkyle ou d'un alkyltrialcoxysilane sur le diacétate de dibutylétain.

Selon le brevet US-A-3708467 on décrit un système catalytique formé d'un mélange de certains sels d'étain avec un chelate de titane spécifique, dans une composition mono-composante.

Enfin dans les brevets US-A-4517337 et US-A-4554310 on décrit l'utilisation de bis(β-dicétone) de diorganoétain pour la réticulation de compositions mono-composantes neutres (US-A-4517337 et US-A-4554310) ou pour des compositions mono- et bi-composantes (EP-A-147323).

Bien que EP-A-147323 ait permis de faire un progrès important dans la recherche d'un catalyseur à l'étain utilisable à la fois pour les compositions mono- et bi-composantes, il est apparu que les bis(β-dicétonate) de diorganoétain présentent un temps de prise à coeur un peu lent en particulier pour les compositions bi-composantes.

De façon générale pour les compositions mono-composantes se pose essentiellement le problème de la stabilité au stockage et de la conservation des propriétés physico-chimiques (extrudabilité, coulabilité, temps de prise) de la composition et conservation de ces mêmes propriétés du réticulat (propriétés mécaniques, dureté, allongement, résistance à la déchirure, adhérence, etc....).

L'homme de métier recherche un catalyseur qui réticule très rapidement à l'humidité de l'air et en surface mais qui procure en même temps une réticulation à coeur la plus complète possible, et qui soit actif à faible dose tout en minimisant les réactions de dégradation du réticulat, inhérentes à la présence d'étain.

Pour les compositions bi-composantes il existe les mêmes problèmes que pour les compositions mono-composantes au niveau du réticulat obtenu, mais en outre le temps de mise en oeuvre, c'est-à-dire le temps pendant lequel la composition peut être utilisée après mélange sans durcir, doit être suffisamment long pour permettre son utilisation mais suffisamment court pour obtenir un objet moulé manipulable au plus tard 24 heures après sa fabrication.

Ce catalyseur doit donc permettre d'obtenir un bon compromis entre le temps d'utilisation du mélange catalysé et le temps au bout duquel l'objet moulé est manipulable. En outre le catalyseur doit conférer au mélange catalysé un temps d'étalement qui ne varie pas en fonction de la durée au stockage.

Un but de la présente invention, en vue de rationaliser la production industrielle des compositions élastomères organopolysiloxane mono-et bi-composantes est de proposer un système catalytique utilisable à la fois dans la réticulation des compositions élastomères mono- et bi-composantes.

Un autre but de la présente invention est de proposer un système catalytique du type ci-dessus qui réponde à la fois aux contraintes communes de conservation, de mise en oeuvre et de réticulation des deux types de compositions élastomères tout en répondant aux problèmes spécifiques posés par chacune d'elle sans pour cela introduire des effets secondaires néfastes au niveau de chacune d'elle.

Ces buts et d'autres sont atteints par la présente invention qui concerne en effet une composition organopolysiloxane comprenant d'une part une base silicone apte à durcir par réaction de polycondensation en un élastomère dès la température ambiante et d'autre part, une quantité catalytiquement efficace du produit de réaction d'un bis-chelate de diorganoétain de formule :

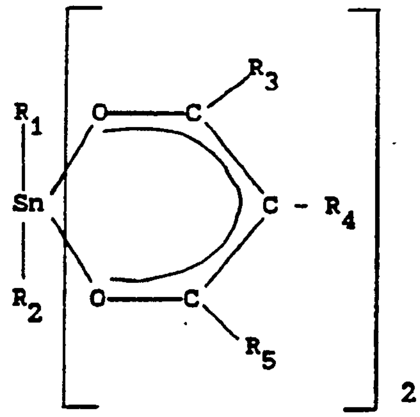

(1)

dans laquelle :

— les symboles $R_1$ et $R_2$, identiques ou différents, représentent des radicaux organiques monovalents hydrocarbonés en $C_1$-$C_{18}$, éventuellement substitués.

— les symboles $R_3$ et $R_5$, identiques ou différents, sont choisis parmi des radicaux $R_1$ et $R_2$, un atome d'hydrogène, des radicaux alcoxy en $C_1$-$C_5$ et des radicaux silyle $Si(R_1)_3$.

— le symbole $R_4$ représente un atome d'hydrogène, un radical hydrocarboné éventuellement halogéné en $C_1$-$C_8$, ou bien $R_4$ forme avec $R_5$ un radical hydrocarboné cyclique divalent en $C_5$-$C_{12}$ éventuellement substitué par des radicaux chloro, nitro et cyano sur un acide organique de formule :

$$XH \quad (2)$$

dans laquelle X est un radical de formule $R_6COO$ où $R_6$ a la même signification que $R_1$, suivant un rapport molaire (1)/(2) compris entre 0,01 et 100, de préférence entre 0,5 et 3.

Le bis-chelate de diorganoétain de formule (1) est un dérivé organique de l'étain décrit dans la littérature chimique.

Ces diverses méthodes de fabrication figurent en particulier dans les brevets américains US-A-3055845 et US-A-4517337 et dans la demande de brevet européen EP-A-147323, dans l'ouvrage "Metal β-dicétonates and Allied Derivatives" de R.C. MEHROTRA, R. BOHRA et D.P. GAUR, publié en 1978 par Academic Press et dans l'ouvrage de "The Chemistry of organotin compounds" de R.C. POLLER, publié en 1970 également par Academic Press, les publications ci-dessus étant citées comme références.

Comme exemples concrets de ces dérivés sont proposés ceux de formules :

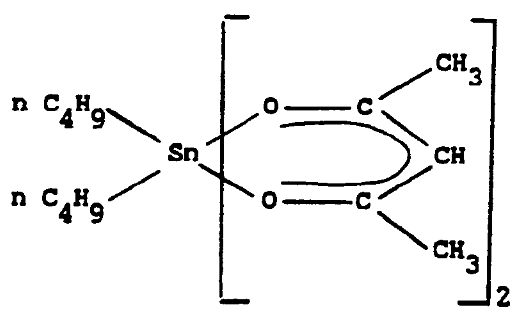

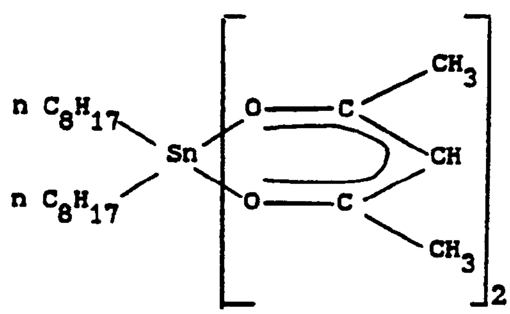

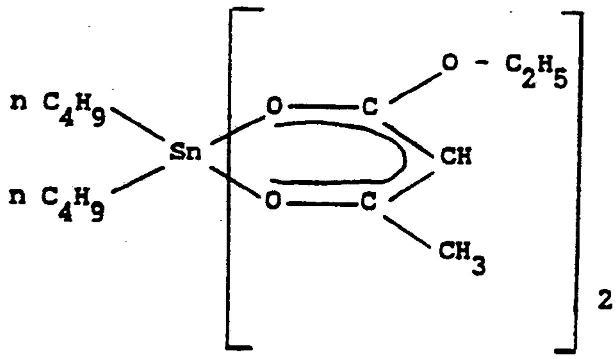

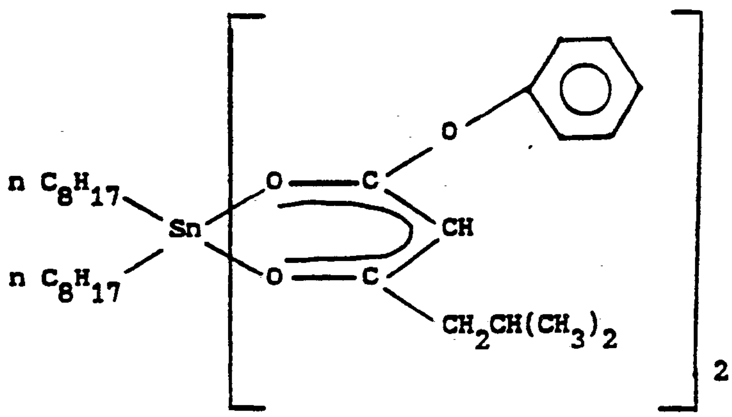

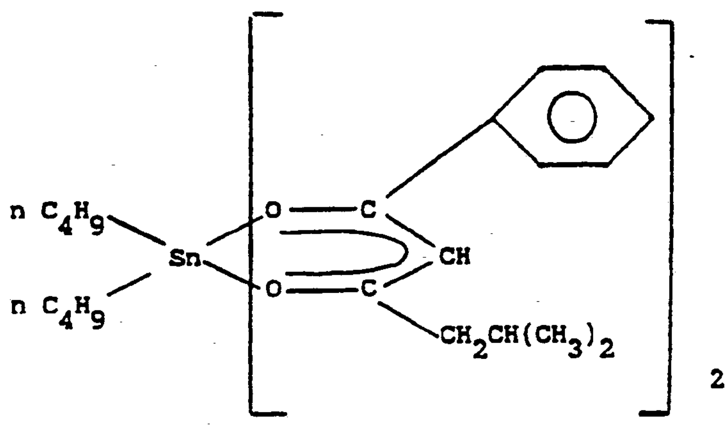

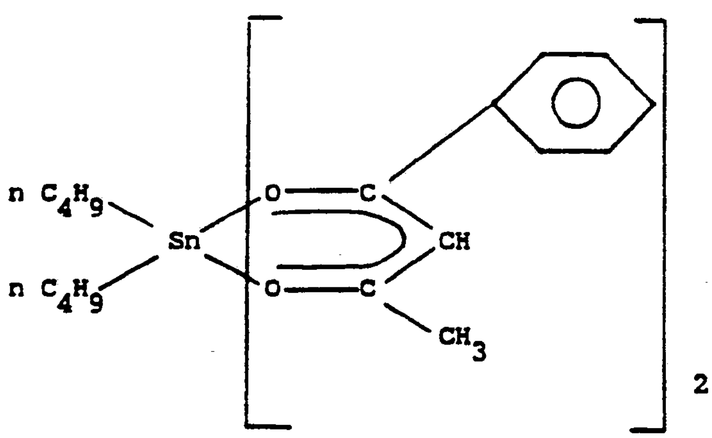

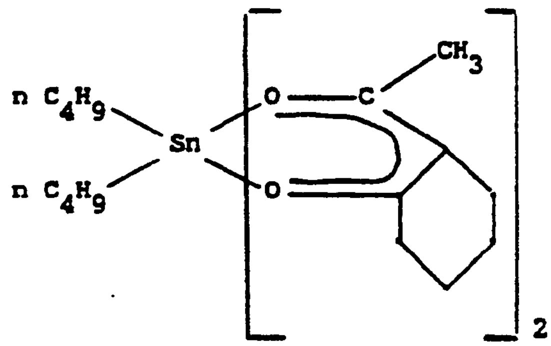

Comme exemple concret d'acides de formule (2) utilisable dans le cadre de la présente invention on peut citer :

— les acides saturés tels que l'acide formique, acétique, proprionique, butyrique, isobutyrique, valérique, isovalérique, pivalique, laurique, éthyl-2 hexanoïque, myristique, palmitique et stéarique et les acides versatiques® qui sont des mélanges d'acides mono-carboxyliques tertiaires saturés ayant au total le même nombre d'atomes de carbone, généralement compris entre 8 et 12.

— les acides insaturés tels que l'acide acrylique, propiolique (CH≡C-COOH), méthacrylique, crotonique, isocrotonique, oléique et maléique.

— les acides carboxyliques tels que l'acide benzoïque, phtalique, isophtalique et téréphtalique,

— les diacides organiques peuvent également être utilisés.

La réaction du bis-chelate de formule (1), pouvant être écrit par la suite sous la formule simplifiée $R_1$ $R_2$ Sn $C_2$ (CH étant la formule simplifiée du ligand chelatant organique), sur l'acide XH de formule (2), peut avoir lieu, en masse, dès la température ambiante, par simple incorporation (mélange) de l'un des produits dans l'autre. L'ensemble est agité au moins quelques minutes pour homogénéiser la masse liquide. On peut procéder à un léger chauffage (par exemple jusqu'à 80°C) pour accélérer la réaction. Le procédé ci-dessus est utilisé lorsque les deux produits de départ sont liquides.

Dans le cas de l'emploi de deux produits de départ dont l'un est solide et l'autre liquide, il peut être nécessaire de chauffer légèrement vers 40-80°C pour dissoudre le produit solide.

Dans le cas de l'emploi de deux produits solides, il est nécessaire de chauffer le mélange au moins à la température de fusion de l'un des deux produits de départ.

La réaction peut être également effectuée au sein d'un solvant organique.

On a pu mettre en évidence, conformément à la présente invention que le mélange réactionnel obtenu conduit à la formation d'un mono-chelate d'étain de valence IV pentacoordiné, dénommé par la suite mono-chelate d'étain et de formule :

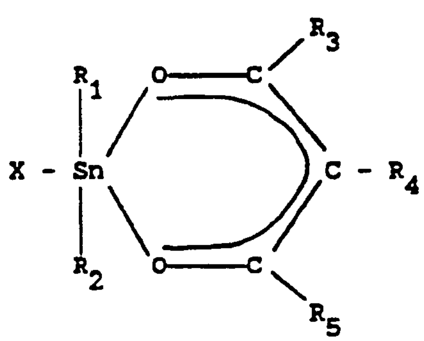

(3)

soit, sous une formule simplifiée $R_1$ $R_2$ Sn CX,
dans laquelle les symboles X, $R_1$, $R_2$, $R_3$, $R_4$ et $R_5$ ont la même signification que ci-dessus.

Les mono-chelates de formule (3) ci-dessus peuvent être identifiés par des techniques analytiques de spectroscopie RMN (raisonnace magnétique nucléaire $^{119}Sn$, $^{13}C$ et $^{1}H$) ainsi que par spectroscopie de masse et par la mesure de l'effet MOSSBAUER.

Il s'avère toutefois qu'en l'état actuel des connaissances des techniques analytiques, la méthode analytique R.M.N $^{119}Sn$, telle que décrite, en particulier dans l'article de Peter J. SMITH "CHEMICAL SHIFTS OF $^{119}Sn$ NUCLEI IN ORGANOTIN COMPOUNDS", page 291 et suivantes, publié dans ANNUAL REPORTS ON NMR SPECTROSCOPY, Volume 8, 1978 ACADEMIC PRESS, est une méthode qui est à elle seule suffisamment

précise pour caractériser les différents composés de l'étain présents au sein d'un mélange, en particulier d'un mélange réactionnel, et pour permettre de trouver les formules chimiques de la plupart de ces composés.

Le paramètre fondamental évalué par la R.M.N. $^{119}Sn$ est la valeur du déplacement chimique exprimé en partie par millions (ppm) relatif à une référence (généralement le tétraméthylétain).

La valeur du déplacement chimique est notamment sensible à l'électronégativité des groupements portés par l'étain et à la variation du nombre de coordinence de l'atome d'étain. Des travaux spécifiques de caractérisation de dérivés organnostanniques à partir de la R.M.N. $^{119}$ Sn sont notamment décrites par A.G. DAVIES et P.J. SMITH, COMPREHENSIVE ORGANO-METALLIC CHEMISTRY 11 TIN, page 523 à 529 et par J. OTERA J. OF. ORGANOMET. CHEM. 221, pages 57-61 (1981).

L'analyse des mélanges réactionnels obtenus selon le procédé de la présente invention, a permis de montrer qu'il est possible d'obtenir le produit mono-chelate $R_1$ $R_2$ Sn CX de formule (3) au sein d'un mélange réactionnel exempt d'oxyde d'étain de formule $R_1$ $R_2$ SnO, de bischelate $R_1$ $R_1$ Sn $C_2$ de formule (1) et, dans la plupart des cas, de distannoxane X $R_1$ $R_2$ SnO Sn $R_1$ $R_2$ X.

Le mélange réactionnel à l'équilibre comporte comme composé de l'étain autre que le produit de formule (3) principalement du dicarboxylate de diorganoétain de formule $R_1$ $R_2$ Sn $X_2$ et, parfois du distannoxane de formule $R_1$ $R_2$ SnO Sn $R_1$ $R_2$ X.

Quand on utilise un rapport molaire des produits de départ (1)/(2) supérieur à environ 1,5, les teneurs en % molaire calculées en atome-gramme d'étain métal des constituants du mélange réactionnel sont en principe:

| | |
|---|---|
| $R_1$ $R_2$ Sn CX : | 15 à 90 |
| $R_1$ $R_2$ Sn $X_2$ : | 85 à 5 |
| X $R_1$ $R_2$ SnO Sn $R_1$ $R_2$ X : | 0 à 5 |

Quand on utilise un rapport molaire des produits de départ (1)/(2) égal ou inférieur à environ 1, il apparaît des quantités significatives (jusqu'à 60% molaire environ) de $R_1$ $R_2$ Sn $X_2$ aux dépens de $R_1$ $R_2$ Sn CX et $R_1$ $R_2$ Sn $C_2$.

Dans les formules ci-dessus, les symboles $R_1$ et $R_2$, identiques ou différents, représentent des radicaux organiques monovalents hydrocarbonés en $C_1$-$C_{18}$ éventuellement substitués.

Ces radicaux organiques englobent plus spécialement :

— les radicaux alkyles, halogénés ou non, en $C_1$-$C_{18}$ tels que les radicaux méthyle, éthyle, propyle, isopropyle, butyle, isobutyle, butyle secondaire, tertiobutyle, pentyle, hexyle, heptyle, éthyl-2 hexyle, octyle, décyle, dodécyle, octadécyle, chlorométhyle, dichloro-2,5 éthyle.

— les radicaux alcényles en $C_2$-$C_{18}$, halogénés ou non, tels que les radicaux vinyle, allyle, méthallyle, butène-2 yle, pentène-2 yle, octène-3 yle, fluoro-5 pentène-2 yle, pentadécényle.

— les radicaux cycloalkyles halogénés ou non en $C_4$-$C_{10}$, tels que les radicaux cyclopentyle, cyclohexyle, méthylcyclohexyle, cyclooctyle, 3-4 dichlorocyclohexyle, 2-6 dibromocycloheptyle.

— les radicaux aryles mononucléaires, halogénés ou non, en $C_6$-$C_{15}$ tels que les radicaux phényle, tolyle, xylyle, cumenyle, chlorophényle, dichlorophényle, trichlorophényle, difluorophényle, trifluorométhylphényle.

— les radicaux arylalkyles mononucléaires, halogénés ou non, en $C_7$-$C_{15}$, tels que les radicaux phényle, phényléthyle, phénylpropyle, trifluorométhylphényl-éthyle.

Les symboles $R_3$ et $R_5$, identiques ou différents, ont la même signification que $R_1$ et $R_2$ c'est-à-dire des radicaux organiques hydrocarbonés monovalents éventuellement substitués en $C_1$-$C_{18}$ et peuvent représenter en outre des atomes d'hydrogène, des radicaux cyanoalkyle ayant la partie alkyle en $C_2$-$C_4$, des radicaux alcoxy en $C_1$-$C_5$, des radicaux silyle $-Si(R_1)_3$.

A titre illustratif de radicaux cyanoalkyles, peuvent être cités les radicaux cyanoéthyle, cyanopropyle, cyanobutyle, et de radicaux alcoxy peuvent être cités les radicaux éthoxy, propoxy.

Le symbole $R_4$ représenté l'atome d'hydrogène, un radical hydrocarboné éventuellement halogéné en $C_1$-$C_8$.

Ce radical englobe plus spécialement les radicaux alkyles, halogénés ou non, tels que les radicaux méthyle, éthyle, propyle, butyle, hexyle, octyle, et les radicaux aryles mononucléaires, halogénés ou non tels que les radicaux phényle, tolyle, chlorophényle, dichlorophényle.

En outre $R_4$, en se couplant avec $R_5$, forme avec $R_5$ un radical hydrocarboné cyclique divalent en $C_5$-$C_{12}$, substitué ou non par des radicaux chloro, nitro, cyano.

A titre illustratif de ces cycles peuvent être cités ceux de formules :

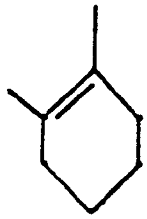 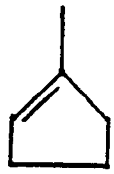 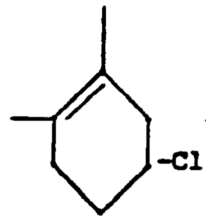 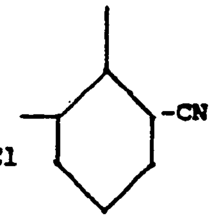

Le symbole X est choisi parmi un atome d'halogène (chlore, brome, iode, fluor) et un radical mono-carboxylate de formule $R_6$ COO dans laquelle le symbole $R_6$ a la même signification que le symbole $R_1$ ci-dessus et représente de préférence un radical alkyle linéaire ou ramifié en $C_1$-$C_{18}$.

Dans ce qui suit ou ce qui précède, sauf mentions contraires, les pourcentages et parties sont en poids.

Le mono-chelate de formule (3) ou le mélange réactionnel à l'équilibre, dénommés par la suite catalyseur à l'étain selon l'invention, est stable au stockage, en récipient fermé, à la température ambiante.

Il est utilisé pour permettre ou faciliter le durcissement en élastomère silicone, dès la température ambiante, de base organopolysiloxane.

Ces bases durcissant (réticulant) par des réactions de polycondensation sont bien connues. Après avoir été catalysées le plus souvent par un dérivé métallique d'un acide carboxylique, elles sont utilisées pour la fabrication de joints, de revêtements hydrofuges de moules, de produits d'enrobage, pour le collage et l'assemblage de matériaux les plus divers, l'enduction de fibres organiques et minérales, etc.....

Ces bases sont décrites en détail en particulier dans de nombreux brevets et elles sont disponibles dans le commerce.

Ces bases silicones peuvent être mono-composantes, c'est-à-dire conditionnées en un seul emballage, c'est-à-dire stables au stockage en l'absence d'humidité et durcissables en présence d'humidité, en particulier d'humidité apportée par l'air ambiant ou par de l'eau générée au sein de la base lors de son emploi.

Ces bases mono-composantes sont généralement de trois types comme décrit plus en détail ci-dessous et sont catalysées par l'incorporation d'une quantité catalytiquement efficace de mono-chelate de formule (3) ou du mélange réactionnel à l'équilibre. Cette quantité catalytiquement efficace est de l'ordre de 0,0001 à 5, de préférence de 0,01 à 3 parties pour 100 parties de la base mono-composante.

En dehors des bases mono-composantes peuvent être utilisées des bases bi-composantes, c'est-à-dire conditionnées en deux emballages, qui durcissent dès l'incorporation du catalyseur à l'étain. Elles sont conditionnées en deux fractions séparées, l'une des fractions pouvant ne renfermer par exemple que le catalyseur à l'étain ou le mélange du catalyseur avec l'agent réticulant.

La quantité catalytiquement efficace de catalyseur à l'étain est de l'ordre de 0,01 à 10 parties, de préférence de 0,1 à 5 parties pour 100 parties de la base bi-composante.

Comme déjà indiqué ci-dessus les bases silicones mono-composantes et bi-composantes durcissant (réticulant) par des réactions de polycondensation sont décrites en détail dans la littérature et sont disponibles dans le commerce.

Ces bases sont généralement préparées à partir des constituants suivants :

A. — 100 parties d'un polymère α,ω-dihydroxypolydiorganosiloxane, de viscosité 500 à 1000000 mPa · s à 25°C formé d'une succession de motifs $(R_2)SiO$ où les symboles R, identiques ou différents, représentent des radicaux hydrocarbonés ayant de 1 à 10 atomes de carbone, éventuellement substitués par des atomes d'halogène ou des groupes cyano.

B. — 0,5 à 20 parties d'un agent réticulant, choisi parmi les composés organosiliciés portant plus de deux groupes hydrolysables liés aux atomes de silicium, par molécule.

C. — 0 à 250 parties de charges minérales.

D. — 0 à 20 parties d'un agent d'adhérence.

Le radical R est choisi généralement parmi les radicaux méthyle, éthyle, propyle, phényle, vinyle et trifluoro-3,3,3 propyle, 80% au moins des groupes R étant méthylé.

Un premier type de formule mono-composante résulte du mélange du polymère A avec un agent réticulant B qui est un silane de formule :

$$R_a\,Si(Z)_{4-a} \quad (4)$$

dans laquelle R a la définition donnée ci-dessus pour le polymère A et Z est un groupe hydrolysable généralement choisi parmi les groupes amino-N substitué, amido-N substitué, aminoxy-N,N disubstitué, cétiminoxy, aldiminoxy, alcoxy, alcoxyalkylènoxy, énoxy, acyloxy, a représente 0 ou 1.

Des bases mono-composantes de ce type sont décrites en détail, en particulier dans les demandes de brevets européens EP-A-141685 et EP-A-147323, citées comme référence.

Les compositions les plus courantes sont celles pour lesquelles Z est un groupe acyloxy et cétiminoxy qui sont décrites plus en détails en particulier dans la demande de brevet européen EP-A-102268, citée comme référence.

Des compositions coulantes bi-composantes, pour lesquelles Z est un groupe acyloxy, et dont la réticulation est accélérée par addition d'hydroxyde alcalino-terreux ou de phosphate sont décrites dans les demandes de brevets européens EP-A-118325 et EP-A-117772, citées comme référence.

Suivant un deuxième type de base mono-composante on part non pas du mélange de A et B mais du produit de réaction $A_1$ de A sur B. En général, le groupe hydrolysable est un groupe alcoxy et la composition comporte en outre pour 100 parties de polymère fonctionnalisé $A_1$, de 0 à 15 parties d'agent réticulant B.

La réaction de A sur B peut avoir lieu en présence de divers catalyseurs tels qu'une amine organique (brevet américain US-A-3542901), un dérivé organique du titane (brevet américain US-A-4111890), d'un carbamate (demande de brevet européen EP-A-210402) et une hydroxylamine N-N disubstituée (demande de brevet européen EP-A-70786).

A ces bases mono-composantes peuvent être ajoutés des agents d'adhérence D choisis parmi les composés organosiliciés portant à la fois, d'une part, des groupes organiques substitués par des radicaux choisis dans le groupe des radicaux amino, uréido, isocyanate, époxy, alkènyle, isocyanurate, hydantoyle, guanidino et mercaptoester et, d'autre part des groupes hydrolysables, en général des groupes alcoxy liés aux atomes de silicium. Des exemples de tels agents d'adhérence sont décrits dans les brevets américains US-A-3517001, US-A-4115356, US-A-4180642, US-A-4273698, US-A-4356116 et dans les demandes de brevets européens EP-A-31996 et EP-A-74001.

Un troisième type de bases mono-composantes sont celles préparées par mélange de 100 parties de polymère A, de 0,5 à 20 parties d'agent réticulant B qui est un polyalcoxysilane (formule 4), Z = alcoxy ou alcoxyalkylèneoxy, de 0 à 250 parties de charges minérales et de 0,5 à 15 parties d'un composé $D_1$ choisi parmi :

— $D_{1-a}$ une amine organique primaire ayant un pKb en milieux aqueux inférieur à 5, un aminoorganosilane et un aminoorganopolysiloxane portant par molécule au moins un groupe organique en $C_1$-$C_{15}$ lié par une liaison Si-C à l'atome de silicium et substitué par au moins un radical amino et au moins un radical alcoxy en $C_1$-$C_5$ ou alcoxy alkylèneoxy en $C_3$-$C_6$.

— $D_{1-b}$ un dérivé organique du titane et du ziconium porteur de groupe organoxy et/ou β-dicétonato.

Des bases mono-composantes comportant $D_{1-a}$ sont décrites dans la demande de brevet européen EP-A-21859 et comportant $D_{1-b}$ sont décrites dans les brevets français FR-A-2121289 et FR-A-2121631, cités comme référence.

Les bases bi-composantes sont formées par mélange de :

a) — 100 parties de polymère (A),

b) — 1 à 20 parties d'un agent réticulant choisi parmi :

- u silane de formule (4) ci-dessus,
- les produits d'hydrolyse partielle du silane de formule (4),

c) — 0 à 150 parties de charges minérales,

d) — 0 à 20 parties d'un agent d'adhérence.

Ces compositions sont bien connues, elles sont en particulier décrites dans les demandes de brevets européens EP-A-10478, EP-A-50358, EP-A-184966 et dans les brevets américains US-A-3801572 et US-A-3888815, cités comme référence.

Comme agent d'adhérence, on peut utiliser les silanes D utilisés pour les bases mono-composantes ainsi que les silanes porteurs d'un groupe morpholino (EP-A-184966) ou d'un radical organique comportant un atome d'azote tertiaire (US-A-3801572 et US-A-3888815).

Les produits d'hydrolyse partielle des alcoxysilanes de formule (4), appelés habituellement polysilicates d'alkyle sont des produits bien connus qui possèdent la propriété de se dissoudre dans les solvants hydrocarbonés usuels tels que le toluène, le xylène, le cyclohexane, le méthylcyclohexane ; le produit le plus couramment utilisé est le polysilicate d'éthyle 40® ayant une teneur en silice de 40%, valeur obtenue après hydrolyse totale des radicaux éthoxy.

Pour les bases mono- et bi-composantes, on utilise comme charges minérales c) des produits très finement divisés dont le diamètre particulaire moyen est inférieur à 0,1 micromètre. Parmi ces charges figurent les silices de combustion et les silices de précipitation ; leur surface spécifique BET est généralement supérieure à 40 $m_2$/g.

Ces charges peuvent également se présenter sous la forme de produits plus grossièrement divisés, de diamètre particulaire moyen supérieur à 0,1 micromètre. Comme exemples de telles charges, on peut citer le quartz broyé, les silices de diatomées, le carbonate de calcium, l'argile calcinée, l'oxyde de titane du type rutile,

les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre; leur surface spécifique est généralement inférieure à 30 m²/g.

Ces charges peuvent avoir été modifiées en surface par traitement avec les divers composés organosiliciques habituellement employés pour cet usage. Ainsi ces composés organosiliciques peut être des organochlorosilanes, des diorganocyclopolysiloxanes, des hexaorganodisiloxanes, des hexaorganodisilazanes ou des diorganocyclopolysilazanes (brevets français FR-A-1126884, FR-A-1136885, FR-A-1236505, brevet anglais GB-A-1024234). Les charges traitées renferment, dans la plupart des cas, de 3 à 30% de leur poids de composés organosiliciques.

Les charges peuvent être constituées d'un mélange de plusieurs types de charges de granulométrie différente ; ainsi par exemple, elles peuvent être constituées de 30 à 70% de silices finement divisées de surface spécifique BET supérieure à 40 m²/g et de 70 à 30% de silices plus grossièrement divisées de surface spécifique inférieure à 30 m²/g.

Le catalyseur à l'étain selon l'invention est plus particulièrement performant pour les bases silicones mono- et bi-composantes où l'agent réticulant (B) de formule (4) présente des radicaux Z, identiques ou différents, choisis parmi des radicaux alcoxy et alcoxyalkylènoxy de formules $R_7O$ et $R_7OTO$ dans lesquelles $R_7$ est un radical alkyle en $C_1$-$C_4$ et T représente un groupe alkylène en $C_2$-$C_4$.

En outre dans le cas où la base silicone bi-composante on peut utiliser le produit de l'hydrolyse partielle de l'agent réticulant (B).

Parmi ces ingrédients figurent des composés organosiliciques, principalement des polymères, qui ont la faculté d'agir sur les caractéristiques physiques des compositions conformes à l'invention (formées par mélange des bases avec le catalyseur à l'étain) et/ou sur les propriétés mécaniques des élastomères silicones issus de ces compositions.

Ces composés sont bien connus, ils comprennent par exemple :

— des polymères α-ωbis(triorganosiloxy)diorganopolysiloxanes de viscosité d'au moins 10 mPa · s à 25°C dont les radicaux organiques liés aux atomes de silicium sont choisis parmi les radicaux méthyle, vinyle, phényle, de préférence au moins 80% des radicaux sont des radicaux méthyle et au plus 3 sont des radicaux vinyle ; de préférence sont utilisées des huiles α-ωbis(triméthylsiloxy)diméthylpolysiloxanes de viscosité 10 mPa · s à 25°C à 1500 mPa · s à 25°C.

— des polymères méthylpolysiloxanes ramifiés, liquides, renfermant de 0,1 à 8% de groupes hydroxyle liés aux atomes de silicium, formés de motifs $(CH_3)_3SiO_{0,5}$, $(CH_3)_2SiO$, $CH_3SiO_{1,5}$ répartis de manière à conduire à un rapport $(CH_3)_3SiO_{0,5}/(CH_3)_2SiO$, de 0,01 à 0,15 et à un rapport $CH_3SiO_{1,5}/(CH_3)_2SiO$ de 0,1 à 1,5.

— des huiles α-ωdi(hydroxy)diméthylpolysiloxanes de viscosité 10 à 300 mPa · s à 25°C et des huiles α-ωdi(hydroxy)méthylphénylpolysiloxanes de viscosité 200 à 5000 mPa · s à 25°C.

— du diphénylsilanediol, du tétraméthyl-1,1,3,3 disiloxanediol.

Les polymères α-ωbis(triorganosiloxy)diorganopolysiloxanes précédents peuvent être remplacés totalement ou partiellement par des composés organiques inertes vis-à-vis des divers constituants des bases et miscibles au moins avec les polymères diorganopolysiloxanes (A) ou ($A_1$). Comme exemples concrets de ces composés organiques peuvent être mentionnés les huiles minérales, les coupes pétrolières et les polyalkylbenzènes obtenus par alkylation du benzène à l'aide d'oléfines à longue chaîne, en particulier les oléfines à 12 atomes de carbone issues de la polymérisation du propylène. Des composés organiques de ce type figurent par exemple dans les brevets français FR-A-2392476 et FR-A-2446849.

Chacun des composés organosiliciques ci-avant peut être utilisé à raison de 1 à 150 parties, de préférence 3 à 75 parties, pour 100 parties de diorganopolysiloxanes (A) ou ($A_1$).

Des ingrédients non organosiliciques peuvent aussi être introduits, par exemple, des stabilisants thermiques. Ces composés améliorent la résistance à la chaleur des élastomères silicones. Ils peuvent être choisis parmi les sels d'acide carboxyliques, oxydes et hydroxydes de terres rares, et plus spécialement les oxydes et hydroxydes cériques ainsi que parmi le bioxyde de titane de combustion et les divers oxydes de fer. On emploie avantageusement de 0,1 à 15 parties, de préférence de 0,15 à 12 parties de stabilisants thermiques pour 100 parties des diorganopolysiloxanes (A) ou ($A_1$).

Pour fabriquer les compositions conformes à l'invention, il est nécessaire dans le cas des compositions mono-composantes d'utiliser un appareillage qui permette de mélanger intimement à l'abir de l'humidité, avec et sans apport de chaleur, les divers constituants fondamentaux auxquels sont éventuellement ajoutés les adjuvants et additifs précités.

Tous ces ingrédients peuvent être chargés dans l'appareillage selon un ordre quelconque d'introduction. Ainsi il est possible de mélanger tout d'abord les polymères diorganopolysiloxanes (A) ou ($A_1$) et les charges (C) et d'ajouter ensuite à l'empâtage obtenu les réticulants (B), les composés (D) et le mono-chelate d'étain.

Il est également possible de mélanger les polymères (A) ou ($A_1$), les réticulants (B), les composés (D) et d'ajouter ultérieurement les charges (C) et le mono-chelate d'étain. Au cours de ces opérations, les mélanges peuvent être chauffés à une température comprise dans l'intervalle 50-180°C sous la pression atmosphérique ou sous une pression réduite afin de favoriser le départ de matières volatiles telles que de l'eau, des polymères de bas poids moléculaire.

Les compositions ainsi préparées peuvent être utilisées telles quelles ou sous la forme de dispersion dans des diluants organiques. Ces diluants sont, de préférence, des produits usuels commercialisés, choisis parmi:

— les hydrocarbures aliphatiques, cycloaliphatiques, aromatiques, halogénés ou non, tels que le n-heptane, le n-octane, le cyclohexane, le méthylcyclohexane, le toluène, le xylène, le mesitylène, le cumène, la tétraline, la décaline, le perchloroéthylène, le trichloroéthane, le tétrachloroéthane, le chlorobenzène, l'orthodichlorobenzène.

— les cétones aliphatiques et cycloaliphatiques telles que la méthyléthylcétone, la méthylisobutylcétone, la cyclohexanone, l'isophorone.

— les esters tels que l'acétate d'éthyle, l'acétate de butyle, l'acétate d'éthylglycol.

Les quantités de diluants introduites doivent être suffisantes pour obtenir des dispersions stables s'étalent facilement sur les substrats. Ces quantités dépendent essentiellement de la nature et de la viscosité des compositions organopolysiloxanes de départ. Elles peuvent donc varier dans de larges proportions ; néanmoins il est recommandé de fabriquer des dispersions contenant de 15 à 85% en poids de diluants.

Les compositions mono-composantes, conformes à l'invention, utilisées telles quelles, c'est-à-dire non diluées, ou sous forme de dispersions dans des diluants, sont stables au stockage en l'absence d'eau et durcissent dès la température ambiante (après départ des solvants dans le cas des dispersions) en présence d'eau pour former des élastomères.

Après le dépôt des compositions telles quelles, sur des substrats solides, en atmosphère humide, on constate qu'un processus de durcissement en élastomères se met en oeuvre, il s'effectue de l'extérieur à l'intérieur de la masse déposée. Une peau se forme d'abord en surface puis la réticulation se poursuit en profondeur.

La formation complète de la peau, qui se traduit par un toucher non collant de la surface, demande une période de temps pouvant être comprise dans l'intervalle allant de 1 minute à 55 minutes ; cette période dépend du taux d'humidité relative de l'atmosphère entourant les compositions et de la faculté de réticulation de celles-ci.

Par ailleurs le durcissement en profondeur des couches déposées, qui doit être suffisant pour permettre le démoulage et la manipulation des élastomères formés, nécessite une période de temps plus longue. En effet, cette période dépend non seulement des facteurs cités ci-dessus pour la formation du toucher non collant mais aussi de l'épaisseur des couches déposées, laquelle épaisseur s'échelonne généralement entre 0,5 mm et plusieurs centimètres. Cette période de temps plus longue peut se situer entre 10 minutes et 20 heures.

Les compositions mono-composantes peuvent être employées pour de multiples applications comme le jointoiement dans l'industrie du bâtiment, l'assemblage des matériaux les plus divers (métaux, matières plastiques, caoutchoucs naturels et synthétiques, bois, carton, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

Les dispersions précitées de ces compositions dans les diluants sont utilisables pour l'imprégnation en couches minces de produits et articles minéraux, synthétiques, organiques, métalliques, tissés ou non-tissés, l'enduction de feuilles en métal ou en matières plastiques ou cellulosiques. Le dépôt peut avoir lieu par exemple au trempé ou par pulvérisation ; dans ce dernier cas, on se sert d'un pistolet à peintures qui permet l'obtention de revêtements homogènes d'épaisseur 5 à 300 µm. Après la projection des dispersions, les diluants s'évaporent et les compositions libérées durcissent en un film caoutchouteux.

La fabrication des compositions bi-composantes conformes à l'invention s'effectue également par mélange des divers constituants dans des appareils appropriés. Pour obtenir des compositions homogènes, il est préférable de mélanger tout d'abord les polymères (A) avec les charges (C) ; l'ensemble peut être chauffé au moins 30 minutes à une température supérieure à 80°C, de manière à parfaire le mouillage des charges par les huiles. Au mélange obtenu, porté de préférence à une température inférieure à 80°C, par exemple de l'ordre de la température ambiante, peuvent être ajoutés les autres constituants, c'est-à-dire les agents réticulants (B), le dérivé organique de l'étain et éventuellement des additifs et adjuvants divers et même de l'eau.

De telles compositions ne sont pas stables au stockage, elles doivent donc être employées rapidement par exemple dans un laps de temps de 40 minutes.

Les additifs et adjuvants divers sont les mêmes que ceux introduits dans les compositions mono-composantes. En particulier il faut mentionner de nouveau les polymères α-ωbis(triorganosiloxy)diorganopolysiloxanes de viscosité d'au moins 10 mPa · s à 25°C dont les radicaux organiques liés aux atomes de silicium sont choisis parmi les radicaux méthyle, vinyle, phényle. Généralement sont utilisées des huiles α-ω(triméthylsiloxy)diméthylpolysiloxanes de viscosité de préférence 20 mPa · s à 25°C à 1000 mPa · s à 25°C, à raison d'au plus 150 parties pour 100 parties de polymère (A).

Pour favoriser le durcissement des compositions bi-composantes, utilisées en couches épaisses, dont l'épaisseur est par exemple supérieure à 2 cm, il est recommandé d'introduire de l'eau à raison d'au plus 1 partie pour 100 parties des polymères (A).

Cet apport d'eau n'est pas nécessaire si les charges (C) en contiennent suffisamment. Pour faciliter son incorporation, l'eau est de préférence ajoutée sous forme d'une dispersion au sein d'un empâtage constitué par exemple des huiles α-ωbis(triorganosiloxy)diorganopolysiloxanes précitées et des charges (C).

Les compositions bi-composantes ne peuvent donc renfermer, pour le conditionnement et le stockage, tous les constituants fondamentaux, c'est-à-dire les polymères (A), le réticulant (B), les charges (C) et le catalyseur à l'étain (E). Sur le plan industriel, elles doivent être fabriquées sous la forme de deux composants, l'un et l'autre étant stables au stockage.

Un premier composant, stable au stockage, peut comporter par exemple les constituants (A), (B) et (C) ; il est préparé, de préférence, par introduction des agents réticulants (B) dans le mélange homogène formé par malaxage des polymères (A) avec les charges (C).

Le deuxième composant comprend alors le catalyseur à l'étain.

D'autres modalités de présentation des compositions bi-composantes peuvent être retenues ; par exemple un premier composant contenant les polymères (A) et les charges (C) et un deuxième composant contenant les agents réticulants (B) et le catalyseur à l'étain.

Il est préférable dans de nombreuses applications que les deux composants soient l'un et l'autre suffisamment fluides de manière à former aisément lors de leur mélange des compositions dont la viscosité s'échelonne par exemple de 10 111 à 800000 mPa · s à 25°C.

Ces compositions qui restent suffisamment fluides pendant au moins 40 minutes, de préférence pendant au moins 80 minutes, après le mélange des deux composants, sont utilisables plus spécialement pour la fabrication de moules en élastomères silicones ; elles peuvent cependant être utilisées pour d'autres applications comme l'enrobage de matériels électroniques et l'enduction de surfaces métalliques ou de matières textiles ou cellulosiques.

Les moules fabriqués sont destinés à reproduire des pièces en matériaux cellulaires ou non, constitués de polymères organiques. Parmi ces matériaux peuvent être cités les polyuréthannes, les polyesters, les polyamides, le polychlorure de vinyle. Il est toutefois recommandé d'utiliser ces moules pour la reproduction de pièces en polyuréthanne, étant donnée qu'ils résistent bien à l'attaque des constituants des mélanges (en particulier des polyisocyanates) conduisant aux matériaux en polyuréthanne.

L'introduction du catalyseur à l'étain conforme à l'invention, constitué au moins partiellement de mono-chelate d'étain permet d'atteindre des conditions de mises en oeuvre optimum pour les compositions mono- et bi-composantes. Elle permet ensuite d'obtenir des élastomères ayant des propriétés de mise en oeuvré stables indépendantes de l'âge et des conditions de conservation des compositions.

— EXEMPLE 1 :

Dans un ballon tricol de 1 litre muni d'un agitateur central, d'un réfrigérant et d'un thermomètre on introduit sous atmosphère d'azote 1 mole de bis-chelate de din-octylétain dont le ligand chelatant est la benzoyl-1 méthyl-4 pentanone-2, avec une mole d'acide éthyl-2 hexanoïque. On maintient l'agitation à 50°C pendant une heure.

On analyse à l'abri de l'humidité de l'air le mélange réactionnel obtenu par R.M.N. $^{119}Sn$.

Les résultats obtenus sont rassemblés dans le tableau 1 ci-après, où t désigne la température de la réaction.

— EXEMPLES 2 A 4 :

On répète exactement le mode opératoire de l'exemple 1, sauf que l'on change les réactifs et/ou les quantités introduites, et la température de la réaction.

Les résultats sont rassemblés dans le tableau 1 ci-après.

La réaction peut être schématisée comme suit :

$$a\ R_1 R_2 Sn C_2 + b\ XH \longrightarrow R_1 R_2 Sn CX$$

a et b représentent les quantités molaires introduites de $R_1$ $R_2$ Sn $C_2$ et XH.

XH1 est l'acide éthyl-2 hexanoïque

XH2 est l'acide laurique

Les colonnes PR1, PR2, PR3 et PR4 donnent les % molaires calculés en atome-gramme d'étain métal pour les produits présents dans le mélange réactionnel :

PR1 : R1 R2 Sn CX
PR2 : R1 R2 Sn X2
PR3 : R1 R2 Sn C2
PR4 : X R1 R2 SnO Sn R1 R2 X

TABLEAU 1

| Ex. | R1 et R2 | a | XH | b | t | PR1 | PR2 | PR3 | PR4 |
|---|---|---|---|---|---|---|---|---|---|
| 1 | n-octyle | 1 | XH1 | 1 | 50 | 45,6 | 22,8 | 22,8 | 7,0 |
| 2 | n-octyle | 1 | XH1 | 2 | 50 | 31,4 | 68,6 | 0 | 0 |
| 3 | n-octyle | 1 | XH1 | 3 | 50 | 17,6 | 82,4 | 0 | 0 |
| 4 | n-octyle | 1 | XH2 | 1 | 80 | 55,4 | 15,7 | 19,3 | 4,8 |

— EXEMPLE COMPARATIF 5 ET EXEMPLES 6 A 8 :

On prépare une composition $P_1$ par mélange de :

— 100 parties d'une huile α-ωdihydroxydiméthylpolysiloxane de viscosité 10000 mPa · s à 25°C,

— 70 parties d'une huile α-ωbis(triméthylsiloxy)diméthylpolysiloxane de viscosité 800 mPa · s à 25°C,

— 55 parties d'une silice de combustion de surface spécifique 300 $m^2/g$, traitée par de l'hexaméthyldisilazane,

— 50 parties de quartz broyé de diamètre particulaire moyen 5 micromètres,

— 10 parties d'un empâtage formé de 90 parties de l'huile α-ωdihydroxydiméthylpolysiloxane, précédemment citée, de viscosité 10000 mPa · s à 25°C, 5 parties d'une silice de combustion de surface spécifique 150 $m^2/g$ et 5 parties d'eau.

On catalyse la composition $P_1$ avec un système réticulant contenant les catalyseurs (C) faisant l'objet des exemples 1 à 3, et du silicate d'éthyle partiellement hydrolysé.

On catalyse la composition $P_1$ en mélangeant 100 parties de cette composition avec deux parties du système réticulant constitué de 17,5 en poids de catalyseur C et 82,5% en poids de silicate d'éthyle partiellement hydrolysé. Ce système réticulant est utilisé tel quel, fraîchement préparé ($\Delta t = 0$) ou bien après avoir subi un vieillissement à 70°C pendant une durée Δt de 72, 148 et 336 heures.

On détermine ensuite le temps d'étalement te de la composition catalysée en notant la durée pendant laquelle cette composition présente un état suffisamment fluide pour s'étaler sous son propre poids et ainsi prendre la configuration du volume interne des récipients dans lesquels elle est versée.

Le test mis en oeuvre pour apprécier la faculté d'étalement est le suivant :

La composition fraîchement catalysée (15 grammes) est versée dans une capsule en aluminium, de forme cylindrique de diamètre 4 cm ; elle doit présenter, après une période d'au plus 5 minutes, une surface parfaitement horizontale.

La composition catalysée se transforme au bout de plusieurs heures à la température ambiante en un élastomère silicone ; 24 heures après la préparation de cette composition catalysée, on mesure la dureté Shore A de l'élastomère formé. Les résultats concernant les temps d'étalement (te) en minutes et les duretés Shore A (DSA) sont rassemblés dans le tableau 2 ci-après.

Le catalyseur de l'exemple comparatif est le bis-chelate de formule $R_2$ $Sn(C)_2$ avec R = n-octyl et C représente :

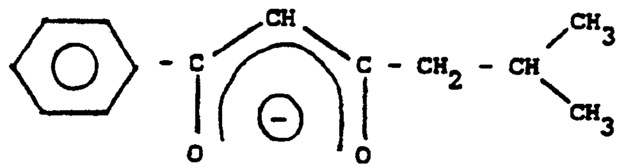

dont le précurseur CH est la benzoyl-1 méthyl-4 pentanone-2.

Les résultats sont rassemblés dans le tableau 2 ci-après ou C exemple n (c ex n) indique que le catalyseur à l'étain utilisé est celui obtenu à l'exemple n.

On constate que les catalyseurs selon l'invention, à la différence du catalyseur témoin, confèrent à l'élastomère silicone des duretés et des temps d'étalement satisfaisants même après vieillissement prolongé.

TABLEAU 2

| EXEMPLE | | 5 | | 6 | | 7 | | 8 | |
|---|---|---|---|---|---|---|---|---|---|
| CATALYSEUR | | TEMOIN | | C ex 1 | | C ex 2 | | C ex 3 | |
| | | te | DSA | te | DSA | te | DSA | te | DSA |
| | 0 | 140 | 5 | 100 | 12 | 95 | 8 | 70 | 6 |
| t | 72 | 145 | 3 | 110 | 15 | 125 | 10 | 120 | 7 |
| | 168 | 180 | 1 | 140 | 10 | 150 | 4 | 135 | 6 |
| | 336 | 450 | 1 | 277 | 11 | 280 | 8 | 280 | 4 |

## Revendications

1. Composition organopolysiloxane comprenant d'une part une base silicone apte à durcir par réaction de polycondensation en un élastomère dès la température ambiante et d'autre part, une quantité catalytiquement efficace du produit de réaction d'un bis-chelate de diorganoétain de formule :

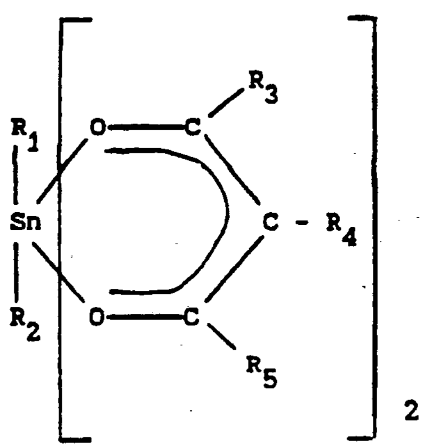

(1)

dans laquelle :

— les symboles $R_1$ et $R_2$, identiques ou différents, représentent des radicaux organiques monovalents hydrocarbonés en $C_1$-$C_{18}$, éventuellement halogénés.

— les symboles $R_3$ et $R_5$, identiques ou différents, sont choisis parmi des radicaux $R_1$ et $R_2$, un atome d'hydrogène, des radicaux alcoxy en $C_1$-$C_5$ et des radicaux silyle $Si(R_1)_3$.

— le symbole $R_4$ représente un atome d'hydrogène, un radical hydrocarboné éventuellement halogéné en $C_1$-$C_8$, ou bien $R_4$ forme avec $R_5$ un radical hydrocarboné cyclique divalent en $C_5$-$C_{12}$ éventuellement substitué par des radicaux chloro, nitro et cyano sur un acide organique de formule :

$$XH \quad (2)$$

dans laquelle X est un radical de formule $R_6COO$ où $R_6$ la même signification que $R_1$, suivant un rapport molaire (1)/(2) compris entre 0,01 et 100, de préférence entre 0,5 et 3.

2. Composition selon la revendication 1, caractérisée en ce qu'elle comporte :

A. — 100 parties en poids d'un polymère α,ω-dihydroxypolydiorganosiloxane, de viscosité 500 à 1000000 mPa · s à 25°C formé d'une succession de motifs $(R_2)SiO$ où les symboles R, identiques ou différents, représentent des radicaux hydrocarbonés ayant de 1 à 10 atomes de carbone, éventuellement substitués par des atomes d'halogène ou des groupes cyano.

B. — 0,5 à 20 parties en poids d'un agent réticulant, choisi parmi les composés organosiliciés portant plus de deux groupes hydrolysables liés aux atomes de silicium, par molécule.

C. — 0 à 250 parties en poids de charges minérales.

D. — 0 à 20 parties en poids d'un agent d'adhérence.

3. Composition selon la revendication 1 ou 2, caractérisée en ce que l'agent réticulant B est un silane de formule :

$$R_aSi(Z)_{4-a} \quad (4)$$

dans laquelle R est un radical hydrocarboné ayant de 1 à 10 atomes de carbone et Z est choisi parmi les groupes amino-N substitué, amido-N substitué, aminoxy-N,N disubstitué, cétiminoxy, alcoxy, alcoxyalkylènoxy, enoxy et acyloxy et a est 0 ou 1.

## Claims

1. Organopolysiloxane composition comprising, on the one hand, a silicone base capable of curing to an elastomer by a polycondensation reaction at room temperature and above and, on the other hand, a catalytically effective quantity of the product of reaction of a diorganotin bischelate of formula :

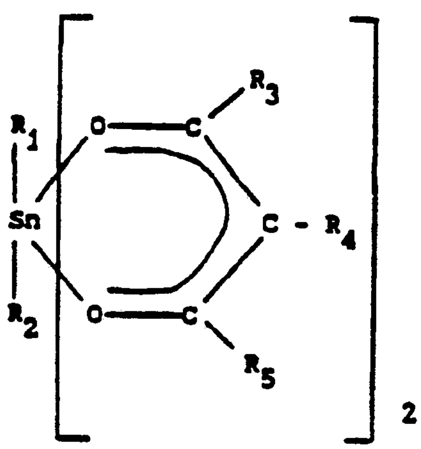

(1)

in which :

— the symbols $R_1$ and $R_2$, which are identical or different, denote optionally halogenated $C_1$-$C_{18}$ hydrocarbon monovalent organic radicals,

— the symbols $R_3$ and $R_5$, which are identical or different, are chosen from radicals $R_1$ and $R_2$, a hydrogen atom, $C_1$-$C_5$ alkoxy radicals and $Si(R_1)_3$ silyl radicals,

— the symbol $R_4$ denotes a hydrogen atom, a $C_1$-$C_8$ optionally halogenated hydrocarbon radical, or else $R_4$ forms with $R_5$ a $C_5$-$C_{12}$ divalent cyclic hydrocarbon radical optionally substituted by chloro, nitro and cyano radicals with an organic acid of formula :

$$XH \quad (2)$$

in which X is a radical of formula $R_6COO$ where $R_6$ has the same meaning as $R_1$, in a molar ratio (1)/(2) of between 0.01 and 100, preferably between 0.5 and 3.

2. Composition according to Claim 1, characterised in that it comprises :

A. — 100 parts by weight of an α,w-dihydroxypolydiorganosiloxane polymer with a viscosity of 500 to 1,000,000 mPa s at 25°C made up of a series of $(R_2)SiO$ units where the symbols R, which are identical or different, denote hydrocarbon radicals containing from 1 to 10 carbon atoms, optionally substituted by halogen atoms or cyano groups,

B. — 0.5 to 20 parts by weight of a crosslinking agent chosen from organosilicon compounds carrying more than two hydrolysable groups bonded to the silicon atoms, per molecule,

C. — 0 to 250 parts by weight of inorganic fillers,

D. — 0 to 20 parts by weight of an adhesion promoter.

3. Composition according to Claim 1 or 2, characterised in that the crosslinking agent B is a silane of formula :

$$R_aSi(Z)_{4-a} \quad (4)$$

in which R is a hydrocarbon radical containing from 1 to 10 carbon atoms and Z is chosen from N-substituted amino, N-substituted amido, N,N-disubstituted aminoxy, ketiminoxy, alkoxy, alkoxyalkyleneoxy, enoxy and acyloxy groups and a is 0 or 1.

**Patentansprüche**

1. Organopolysiloxan-Zusammensetzung, enthalten einesteils eine Silicon-Grundlage, die geeignet ist, durch Polykondensationsreaktion ab Raumtemperatur zu einem Elastomeren zu härten, und anderenteils eine katalytisch wirksame Menge des Reaktionsprodukts eines Diorganozinnbischelats der Formel

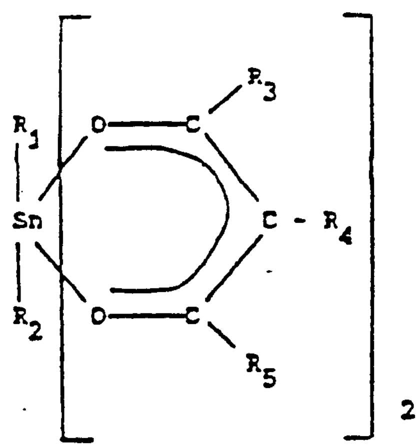

(1)

worin

— die Symbole $R_1$ und $R_2$, die gleich oder verschieden sind, einwertige, organische $C_{1-18}$-Kohlenwasserstoffreste, die gegebenenfalls halogeniert sind, bedeuten,

— die Symbole $R_3$ und $R_5$, die gleich oder verschieden sind, unter den Resten $R_1$ und $R_2$, einem Wasserstoffatom, den $C_{1-5}$ -AlKoxyresten und den Silylresten Si $(R_1)_3$ ausgewählt sind,

— das Symbol $R_4$ ein Wasserstoffatom, einen gegebenenfalls halogenierten $C_{1-8}$-Kohlenwasserstoffrest bedeutet oder $R_4$ mit $R_5$ einen zweiwertigen, cyclischen $C_{5-12}$-Kohlenwasserstoffrest bildet, welcher gegebenenfalls durch Chlor-, Nitro- und Cyanoreste substituiert ist, mit einer organischen Säure der Formel

$$XH \quad (2)$$

worin X für einen Rest der Formel $R_6COO$ steht, in der $R_6$ die für $R_1$ angegebene Bedeutung besitzt, entsprechend einem Molverhältnis (1)/(2) zwischen 0,01 und 100, vorzugsweise zwischen 0,5 und 3.

2. Zusammensetzung gemäß Anspruch 1, dadurch gekennzeinnet, daß sie enthält:

A. — 100 Gew.Teile eines α,ω-Dihydroxypolydiorganosiloxan-Polyemeren mit einer Viskosität von 500 bis 1000000 mPa · s bei 25°C, gebildet aus einer Abfolge von Gruppierungen $(R_2)SiO$, worin die Symbole R, die gleich oder verschieden sind, Kohlenwasserstoffreste mit 1 bis 10 Kohlenstoffatomen, welche gegebenenfalls durch Halogenatome oder Cyanogruppen substituiert sind, bedeuten,

B. — 0,5 bis 20 Gew.Teile eines Vernetzunsmittels, ausgewählt unter den Organosilicium-Verbindungen, die mehr als zwei an Siliciumatome gebundene, hydrolysierbare Gruppen je Molekül enthalten,

C. — 0 bis 250 Gew.Teile mineralische Füllstoffe,

D. — 0 bis 20 Gew.Teile eines Adhäsionsmittels.

3. Zusammensetzung gemäß Anspruch 1 oder 2, dadurch gekennzeichnet, daß das Vernetzungsmittel B ein Silan der Formel

$$R_aSi(Z)_{4-a} \quad (4)$$

ist, worin R einen Kohlenwasserstoffrest mit 1 bis 10 Kohlenstoffatomen wiedergibt und Z ausgewählt ist unter den N-substituierten Amino-, N-substituierten Amido-, N,N-disubstituierten Aminoxy-, Ketiminoxy-, Alkoxy-, Alkoxy-alkylenoxy-, Enoxy- und Acyloxygruppen und a für 0 oder 1 steht.